# EUROPEAN PATENT SPECIFICATION

(11) **EP 0 893 034 B1**
(45) Date of publication and mention of the grant of the patent: **01.09.2004**
(21) Application number: 97921036.6
(22) Date of filing: 18.04.1997
(51) Int. Cl.: H04Q 3/00, H04M 3/42

(54) **IMPROVEMENTS IN, OR RELATING TO INTELLIGENT NETWORK ARCHITECTURES**
VERBESSERUNGEN IN BEZUG AUF INTELLIGENTE NETZWERKARCHITEKTUREN
AMELIORATIONS DANS OU CONCERNANT LES ARCHITECTURES DE RESEAUX INTELLIGENTS

(30) Priority: 23.04.1996 GB 9608404; 23.04.1996 GB 9608327; 23.04.1996 GB 9608326
(43) Date of publication of application: 27.01.1999
(73) Proprietor: TELIA AB, 123 86 Farsta (SE)
(72) Inventor: RAPP, David, S-222 51 Lund (SE); STERNHEDEN, Christina, S-217 59 Malmö (SE); MANSSON, Lennart, S-245 63 Hjärup (SE)
(74) Representative: Akerman, Marten Lennart
(86) International application number: PCT/SE1997/000658
(87) International publication number: WO 1997/040635

(56) References cited:
- WO-A-96/04756
- US-A- 5 469 500

## Description

The present invention relates to an intelligent network architecture for telecommunications systems, in particular, an intelligent network architecture including a service execution level, a service switching level and a switching and transport level, and in which service provision and control are independent of the telecommunications transport and switching medium.

With electromechanical switching systems, the introduction of new services, such as subscriber trunk dialling, requires the design of new hardware and modification of all exchanges in the system. This is costly and disruptive. Stored Program Control exchanges were introduced to facilitate the introduction of new services by modifying call-processing programs in the exchanges. It was initially thought that this would be an easy and cheap method of updating exchanges with new services. in practice, however, it has been found that making consistent software upgrades to many interconnected exchanges in a network is as costly and time-consuming as the hardware changes required with electromechanical exchanges. Consequently, such changes are made very infrequently and the introduction of new services is still a slow process. One way in which this problem can be overcome is to separate the software that controls basic functions, such as setting up and supervising connections, from the software required for providing more complex services. These include, for example, freephone service, calling-card service and value-added services.

The more complex services can be controlled by a centralized processor. called a service control point (SCP), which is remote from the exchange setting up the connection. A telecommunications network that has been enhanced in this way is called an intelligent network (IN). The exchange, or switching node, that makes the required connection is called a service switching point (SSP). In the AT&T network it is called an action control point (ACP).

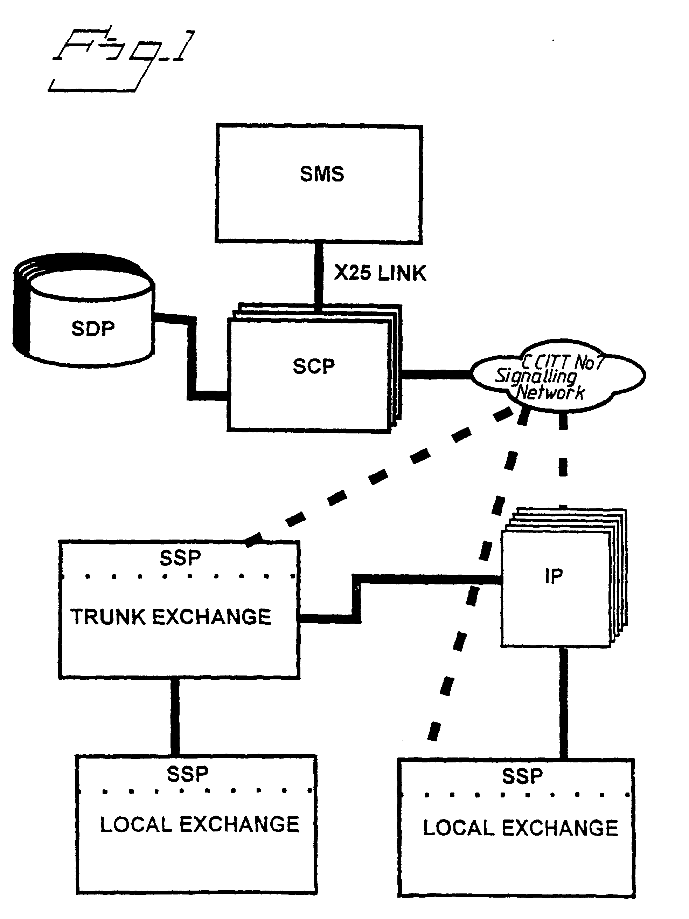

The SSP communicates with its controlling SCP via a common-channel signalling network. The architecture of a known IN is shown in Figure 1. The SSP may be at any level in the network hierarchy (e.g. a local exchange, a trunk exchange, or an exchange in a special overlay network). Its software is modified so that a number of events can trigger it to suspend normal call processing and request the intervention of the SCP. These events may be the caller's class of service, the code digits dialled, or some subsequent event (e.g. ring tone no reply). As a result of the event, the SSP sends information to the SCP and resumes call processing when it receives back information on how to proceed.

The SCP is a centralized processor with access to a large database Its software is organized in three levels:
- node software which provides common utilities, such as signalling, database access, transaction monitoring and alarm reporting;
- service logic programs (SLP) which are the programs that control the various services and are constructed, as far as possible, from modules, known as service-independent building blocks (SIB), which correspond to frequently used functions, such as: translate, verify, compare, charge and queue;
- the service logic execution environment (SLEE) which is the program-execution environment that hosts the various SLPs and interworks with the basic cali-control and switching operations of the SSP.

Other specialized functions required for IN services are provided by intelligent peripherals (IP). Examples are digit-collection units and voice-guidance systems which give instructions to users by means of recorded announcements. These are associated with SSPs, but they can be controlled by the SCP via common-channel signalling. The common-channel signalling network is the means by which messages are passed between the SCP and SSPs and IPs. The signalling is non-associated because, usually, the SSP interacts with the SCP before the route is selected for a call. Thus, messages between the SSP and SSC pass through signal-transfer points. This requires the use of a modified version of the basic CCITT common-channel signalling system No.7. The signalling-connection control part (SCCP) and transaction capabilities (TC) have been added. The TC is a message structure designed specifically for the query and response messages used for IN transactions and the SCCP provides the information for routing these messages.

In a network with a number of SCPs, there may also be a service management system (SMS), connected to all the SCPs by data links. This manages the addition of new customers, updates of data (from the network operator, or customers) and data reloads (if an SCP crashes). Several telecommunication network operators have installed IN equipment, an example is the British Telecom digital derived services network (DDSN). This is an overlay and contains digital derived services switching centres (DDSSC), which are connected to trunk exchanges (DMSU). The DDSCs perform the SCP function and network control points (NCP) perform the SCP function. BT's DDSN network caters for freephone numbers for which call charges are levied against the called customer instead of the caller. Use of an IN enhances the freephone service in several ways. For example. if the organization being called has several offices, the call can be routed to whichever is nearest to the caller. However, outside of normal working hours all calls can be routed to a single office and this can be changed from day-to-day. Voice guidance can be used to enable a caller to choose between different departments of the organization being called. The network also caters for premium-rate calls to service providers, such as information services and the cellular radio networks. In this case, the caller pays at a higher rate than normal and the income from these calls is shared between network operator and the service provider. At present, intelligent networks use a centralized structure. However, IN-based services may be decentralised, with the SLEE, SLP and database located at local, or trunk, switching centres rather than at a remote SCP. This gives faster response times, reduces the load on the common-channel signalling network, and may be cheaper for widely used services.

As the number and complexity of services provided by telecommunications networks grows, the processing load carried by service control points becomes ever greater. This is compounded by the ever growing number of subscribers who wish to use advanced telecommunications services. The more centralised IN architectures cannot cope with these high service demands. To overcome this problem it is necessary to move towards a network architecture in which intelligence is distributed. The present invention relates to such an architecture, which, it is believed, has significant advantages over known architectures, such as the BT architecture described above.

As described above, it is known to use a modular construction for the service programs in an intelligent network using modules known as SIBs. However, SIBs represent very basic building blocks from which advanced telecommunications services can be constructed, In modern telecommunications systems, the services offered to subscribers are often complex, being made up of a range of different elementary services assembled to provide particular composite service provisions which are specific to only a few subscribers. In some cases, a service profile may be unique to a single subscriber. This creates a problem with service diversity. It is not economically possible for a network operator to provide an IP for each service provided.. Such a strategy would, in extreme cases, result in the number of IPs employed in an intelligent telecommunications network exceeding the number of subscribers. There would, of course, be substantial duplication between the service functions provided by the different IPs.

US-A-5,469,500 discloses a system for delivering calling services. The system contains a telephone network comprising switches and a SCP, a service node/intelligent peripheral service creation environment (SN/IP SCE), and a service logic executive (SLX) serving as an interface between the telephone network and the SN/IP SCE. A database is connected to the SLX through a database server.

However, US-A-5,469,500 does not disclose a system comprising a data transmission network including at least two LANs interconnected by means of an ATM link.

According to the present invention, there is provided a telecommunications system, having an intelligent network architecture and including at least one service data point, at least one service control point, a plurality of service switching points, and a telecommunications traffic network, characterised in that functional entities, controlling execution of telecommunications services, are linked by a data transmission network, capable of operating independently of said telecommunications traffic network.

Preferably, said telecommunications system is arranged in three hierarchical levels, namely:
- a service execution level;
- a service switching level; and
- a switching and transport level.

Said data transmission network may include at least one LAN, to which a plurality of said functional entities are connected.

Said data transmission network may include at least two LANS, to each of which is connected a plurality of functional entities, and said at least two LANS may be interconnected by means of an ATM link over which data is passed in RPC and TCP/IP format.

Said LAN(s) and the functional entities connected thereto may form a service execution level.

Said functional entities may include one, or more, of the following:
- Internet servers;
- service data points;
- service control points;
- service nodes;
- intelligent peripherals; and
- internet support systems.

Said switching and transport level may include one, or more, of the following switching entities:
- a SUS;
- a SSP;
- an ATM SSP; and
- an Internet SSP.

Said service switching level may include one, or more SCPs.

Said service execution layer may be connected to said switching and transport level by means of an INAP/TCP/IP link between said data transmission network and an SCP in said service switching level, and said SCP in said service switching level may be directly linked to switching entities in said switching and transport level.

Gateway means may be provided to link functional entities, including SCPs, in said service execution level, to switching entities in said switching and transport level.

SCPs in said service switching level may be linked to functional entities in said service execution level via a gateway means, and may, in addition, be linked directly to said data transmission network.

IPs in said service execution level may be linked by speech paths to SSPs in said switching and transport level, said speech paths being used for transmission of recorded announcements, voice prompts, or the like.

Service networks for the provision of:
- billing;
- maintenance and repair; and
- administration;
may be linked to said data transmission network and may be thereby adapted for two way communication with:
- switching entities in said switching and transport level;
- functional entities in said service execution level; and
- service control points in said service switching level.

Signalling data may be transmitted over links between said gateway means and switching entities in said switching and transport level and SCPs in said service switching level by means of a version of CCITT signaling No. 7, modified for use with INs.

Said switching and transport level may be adapted to carry subscriber traffic including, but not limited to, data, speech, video and facsimile.

Said telecommunications system may include at least a SCP, a SDP, and a plurality of IPs, and telecommunications services and service profiles, provided to subscribers to said telecommunications system, may be assembled from a plurality of service components, at least some of which are located in different ones of said plurality of IPs.

Some of said plurality of service components, required for a telecommunications service and/or service profile, may be located in, and obtainable from, said service control point.

Said telecommunications system may include more than one SCP.

At least some services provided by said telecommunications system may be generated by cooperation between:
- at least two IPs; or
- one, or more IPs and one, or more SCPs; or
- at least two SCPs.

At least some services, provided by said telecommunications system, may be built from service components held on one, or more, IPs and/or SCPs.

Some of said service components may be services in their own right.

Said service components may include:
- automatic registration on GSM telephones;
- direct connection to customer control from predefined numbers;
- registration, with respect to A-numbers, on the telephone from which a call is made;
- voice mailbox functions;
- price and number plan;
- account call functionality;
- credit limits;
- blockings;
- cost warnings;
- customer control;
- change of price;
- customer controlled debiting;
- once-for-all price;
- "hot billing";
- statistics; and
- geographic and time control.

Each of said plurality of IPs and said at least one SCP may have independent access to said SDP.

There may be provided at least one SDP linked to a telecommunications information system having a central data base holding data on operational aspects of said telecommunications system and subscribers connected thereto, and service network data broker means are provided to handle data requests from said service data point to said central data base and data supplied from said central data base to said service data point.

Said central data base may be able to access data held on at least one data base external to said telecommunications system.

Said at least one external data base may include a telebanking and/or credit card database.

Said central data base may be adapted to supply data to, and receive data from, a plurality of service management functions.

Said plurality of service management functions may include subscriber location services for mobile telephony, paging services and personal number services.

Said central data base may be adapted to supply data to, and receive data from, a plurality of management functions.

Said plurality of management functions may include billing functions and, repair and maintenance functions.

Data communications between said service management functions, or said management functions, and said central data base may be effected by a LAN and data broker means.

Embodiments of the invention will now be described, by way of example, with reference to the accompanying drawings, in which:
Figure 1 illustrates, in block schematic form, a known intelligent network architecture.
Figure 2 illustrates, in block schematic form, an intelligent network architecture according to the present invention.
Figure 3 illustrates, in block schematic form, an interface arrangement between an intelligent network and an information system, according to the present invention.
Figure 4 illustrates, in block schematic form, a service architecture for an intelligent network according to the present invention.

To facilitate an understanding of the present invention, a glossary of some of the abbreviations used in the context of intelligent networks is set out below:
- AP:: Application Process
- ATM:: Asynchronous Transfer Mode
- BGS:: An element of a digital exchange, e.g. Ericsson AXE digital electronic exchange.
- BISDN:: Broad Band Integrated Services Network
- CLNP:: Connection-Less Network Protocol (ISO)
- CNM:: Customer Network Management
- CONP:: Connection-Oriented Protocol (ISO)
- CONS:: Connection-Oriented Network Service
- CORBA:: Common Object Request Broker Architecture
- CP:: Connection Point
- CPU:: Central Processing Unit
- DCE:: Distributed Computing Environment
- DHCP:: Internet Dynamic Host Configuration Protocol
- DL:: Data-link layer
- DSM-CC:: Digital Storage Media - Command and Control
- DXI:: Data Exchange Interface
- GW:: Gateway
- IISG:: Interactive Internetwork Systems Generator
- IN:: Intelligent Network
- INAP:: Intelligent Network Applications Protocol
- IP:: Interface Protocol, for the Internet
- IP:: Intelligent Peripheral
- ISO:: International Standards Organisation
- ISUP:: ISDN User Part
- ITU:: International Telecommunications Union
- LAN:: Local Area Network
- LX:: Local Exchange
- MD:: Mediation Device
- MF:: Management Function
- MSC:: Mobile Switching Centre
- OAM:: Operations Administration and Maintenance
- PABX:: Private Automatic Branch Exchange
- PGF:: Product Common Function
- PSTN:: Public Switched Telephone Network
- RPC:: Routing Preceding Call
- SCF:: Service Control Function
- SCP:: Service Control Point
- SDF:: Specialised Database Function
- SDH:: Synchronous Digital Hierarchy
- SDN:: Synchronous Digital Network
- SDP:: Service Data Point
- SIB:: Service Independent Building Block
- SLEE:: Service Logic Execution Environment
- SLP:: Service Logic Program
- SMAS:: Service Management and Administration Service
- SMF:: Service Management Function
- SMS:: Service Management System
- SMP:: Service Management Point
- SN:: Service Node
- SRF:: Specialised Resource Function
- SPC:: Stored Program Control
- SS7:: CCITT Signalling System No. 7
- SSF:: Service Control Function
- SSP:: Service Switching Point
- STM:: Synchronous Transfer Mode
- SUS:: An element of digital exchange, e.g. Ericsson AXE digital electronic exchange, which may contain "Plus" services.
- TCP:: Transmission Control Protocol
- TDMA:: Time Division Multiple Access
- TMN:: Specialised Database Function
- TP:: Transport Protocol
- TX:: Trunk Exchange
- UNIX:: A computer operating system
- WWW:: World Wide Web

Turning now to Figure 1, which illustrates a known generic IN architecture, there is shown a number of SSPs located in local, or trunk exchanges. Services are provided by intelligent peripherals (IP), which are linked to, and shared between, the SSPs. The provision of services is controlled by SCPs which can access data held on service data points, SDPs, required for the provision of services by the IPs. Where a number of SCPs are used, a service management systems. SMS, may be provided to integrate and control the operations of the SCPs. The SMS is linked to the SCPs by an X25 data link and the SCPs communicate with the IPs via a signalling network using a modified version of CCITT signalling No. 7. This system is hierarchical in structure and does not provided for speech links between IPs and subscribers.

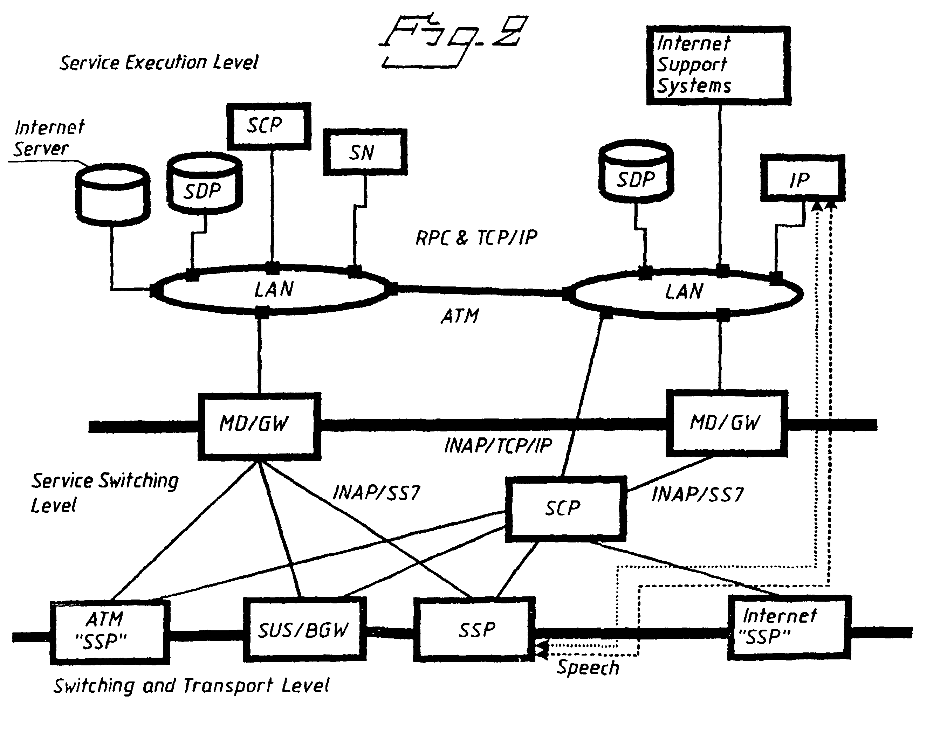

The architecture of the present invention will now be described with reference to Figure 2. The network operates at three levels, namely:
- a service execution level;
- a service switching level; and
- a switching and transport level.

The service execution level is concerned with the assembly, operation, administration and execution of telecommunications services provided to subscribers to the telecommunications system. This level includes a data transport network enabling a range of functional units employed in the provision of telecommunications services to communicate with each other. Data transport may be effected over one, or more LANs, which may use transmission protocols such as SDH, or ATM. The individual LANs of this network may be interconnected by means of ATM links. The two LANs shown in Figure 2 may employ ATM in conjunction with RPC and TCP/IP, i.e. a transmission control protocol based on the internet Protocol. Typically, the functional entities connected to the service execution level data transport network may include:
- Internet servers, i.e. a server which provides access to the Internet;
- service control points;
- other service networks, e.g. billing, maintenance and administration networks;
- service data points, which contain detailed information relating to subscribers and the networks, which may in turn be linked to major central databases, and which may include such facilities as home location registers and visiting subscriber registers;
- Internet support systems, i.e. systems designed to facilitate access by subscribers to the internet and WWW; and
- intelligent peripherals, IP, which are the functional devices which - provide telecommunications services.

The service switching level provides the interface between the service execution level and the switching and transport level. This level of the system ensures that access is provided between the SSPs of the switching and transport level and the service functions of the service execution level. In particular, the service switching level ensures that the resources required by an SSP to provide a given service to a subscriber are available to that SSP. The service switching level includes at least one service control point which, may, or may not, be accessed for the provision of a given service to a subscriber. The links between the service execution level and the service control point located in the service switching level may be provided by an intelligent network applications protocol operating with CCITT signalling No.7, appropriately modified for use in IN, and employ a suitable gateway, or mediation unit, MD/GW. Alternatively, a direct link may be provided using an intelligent network applications protocol in conjunction with a suitable transport control protocol such as the internet protocol.

Direct links, across the service switching level may be provided between the service execution level and the switching and transport level, by-passing the service control point located in the service switching level. Such links are provided by means of gateway, or mediation units, MD/GW and use intelligent network applications protocols in conjunction with CCITT signalling No. 7. It should be noted that direct speech paths may be provided between IPs and SSPs to facilitate the provision of, for example, voice prompt driven services.

The switching and transport level of the system is the conventional traffic bearing telecommunications system which carries customer traffic. Such traffic may include data, speech, video and facsimile. The SSPs of the switching and transport level may included internet SSPs, ATM SSPs, exchange based SSPs, such as SUS and BUGS (Ericsson AXE digital exchanges) and other types of SSP.

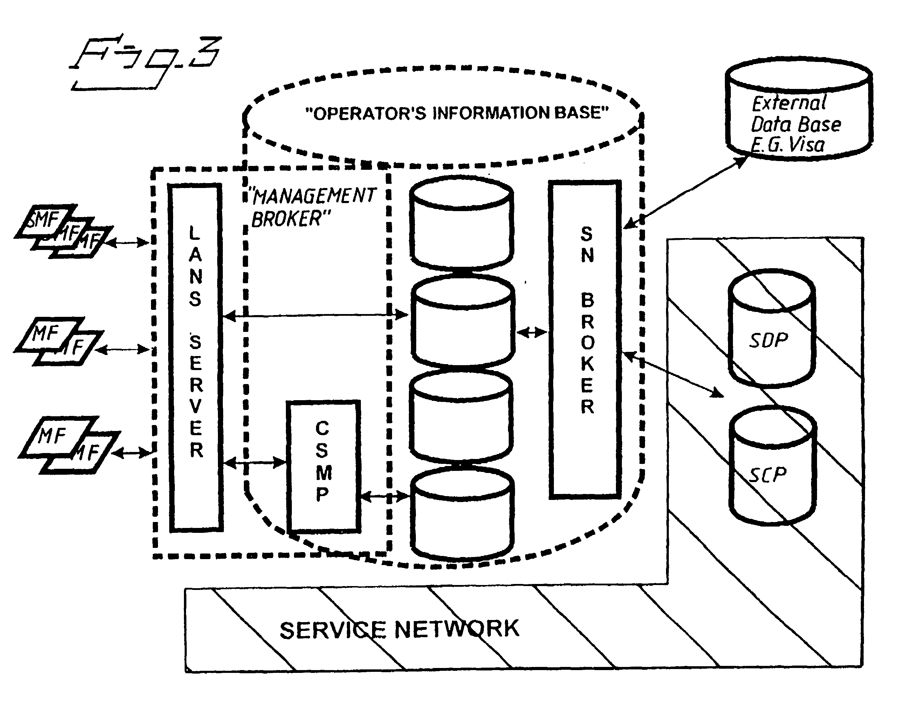

Referring now to Figure 3, there is shown a central data base, labelled "operator's information base". This data base holds substantial amounts of data relating to the telecommunications operator's system/network, including records of the prevailing system and service configuration, maintenance and repair information, data on all subscribers connected to the system and the quality of service to which they are entitled etc..

The central data base may be operationally linked to one, or more, external data bases, from which it is able to extract additional data relevant to the operation of the telecommunications system and/or the provision of telecommunications services over the system. For example, telecommunications services now provide for the electronic transfer of funds, so the external data base might be a data base operated by a credit card company, or other financial institution, e.g. VISA. The link between the central data base and external data bases may be via the medium of the service network data broker.

The service network associated with a telecommunications system is that element of the telecommunications system responsible for the provision of telecommunications services to subscribers. The service network may be an intelligent network. Service provision and execution, especially for advanced services and service profiles, requires the supply of substantial amounts of data relating to the telecommunications network and the subscribers connected thereto. This data must be accurate and current. It is thus of considerable importance that the service data points in an intelligent network, used for the provision and execution of advanced services, have access to accurate and current data. In the present invention, the service data points of an IN can transmit data requests to the central data base and receive data therefrom, in response to such requests, via a service network data broker. It should be remembered that the central data base must cope with data requests from many SDPs on a continuous basis. For this reason, the use of a service network data broker is seen as being a substantial advantage.

Data may also be passed in the reverse direction, i.e. from service data points to the central data base. Changes to the network configuration, or service requirements of a subscriber, may first be recorded by a service data point.

The central data base not only supports service provision and execution, but also supports a range of service management functions and network management functions, designated SMF and MF respectively in Figure 3. Management functions may include billing services, administration services, repair services and maintenance services. Service management functions may include subscriber locations services, for example, for mobile telecommunications, paging services and personal number services. Information may be exchanged between the central data base and the service management functions and management functions of the network via the medium of a management broker. The management broker may include LAN servers, CSMP, and LANs linking the central data base to the various management and service management function nodes of the network.

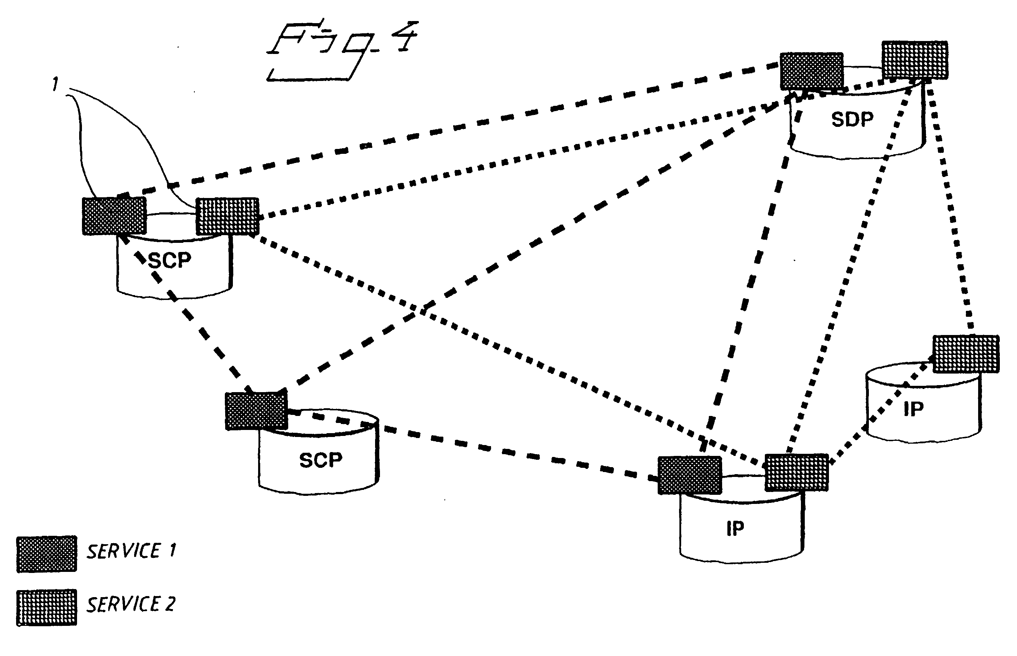

Turning now to Figure 4, there is shown the service execution level of an intelligent network, according to the present invention. Each of the two IPs shown in Figure 4 carries different service components required by a given service profile, service 2. When this service profile is made available to a subscriber, both IPs are required to cooperate in the execution of the service. It should be noted that service related data can be accessed from the SDP by both IPs.

In a second service execution configuration, service 1, provision of the service requires cooperation of both the SCPs illustrated in Figure 1. together with one of the IPs. In other words, the SCPs may hold certain service components. Both the SCPs and the IP involved in the provision of this service profile, service 1. can access service dependent data held on the SDP.

The service architecture herein described is aimed at achieving:
- more efficient service development - by service components which are used in a number of products, i.e. for product common functions;
- development of new types of services, for example, with data communications and customer equipment;
- support for customer adaption (packaging) of "standardised" services;
- controlled development of the service platforms and support for a number of suppliers;
- distribution of service components on different nodes in the platforms, for optimal utilisation of nodes: and
- conditions for integration of service platforms, fixed and mobile.

The service platform in the network is primarily provided by an IN. IN, as it is defined today, must overcome the problems caused when the range of services and the number of customers increases. An important restriction with existing IN systems is the use of "single point of control", i.e. an SCP is located, like a spider, at the centre of a web and controls all resources (for instance, SDPs and IPs) which are used to implement the service. IN originates from a standard in which it was assumed that all telecommunications services were standardised. Because of the demands of competition and customer requirements, services must be provided in many different formats and packaged to meet the needs of different market sectors.

In order to rapidly and efficiently create new services, especially integrated services, it is necessary to utilise the components of existing services. This, among other things, implies that a number of SCPs will be involved in a single service. It is also desirable to be able to implement a service component in the most suitable network node, for example, by moving logic from one SCP to another. This has consequences for the cooperation between different network nodes in terms of protocols and interfaces and the distribution of functions and data between different nodes.

This distribution and cooperation also affects support systems, when new services and customers are added to the network, for example, billing is effected. Any proposal for a new service architecture and/or service platform must, therefore, include interfaces with support and administration systems and provide for inter-operation therewith.

A number of services will be offered by fixed and mobile access routes. This means that service platforms must be constructed in accordance with a common service architecture and must have a well defined inter-operability.

A (common) service architecture creates a base for a service platform strategy and a common relationship with suppliers.

The concepts embodied in the present invention illustrate a number of features:
- service components in the form of product common functions;
- architecture for service components; and
- modifications to the IN platform

Today's IN is, according to IN standards, defined by the editions CS1, CS2, etc; it includes the following concepts:
- SCF, SSF, SDF and SRF for functional nodes;
- SSP, SCP, SDP and IP for implemented nodes; and
- Core INAP as interface and protocol.

The IN standard is not integrated with the TMN-standard; for this reason the integration of networks and support systems in the service platform is poorly supported. At the same, time IN-standards are not well adapted to handle developments in the field of computing and data communication. Suppliers with UNIX-based solutions often utilise the standards from the DP sector in the operation and maintenance of IN-nodes

IN has emerged as a superstructure to the "basic call" of telephony, which can be regarded as a sub-routine call from the main switching train to IN. After the necessary "calculations" are performed, the main switching train continues, based on new date. IN has a strongly function-oriented approach. Connection and signalling is made step-by-step, i.e. necessary network resources are allocated gradually. The base for control is in SCP in a single "point of control". In the new distributed concepts, such as ODP, TINA and CORBA, there is better control over existing resources when the switching train starts.

The long term development, within IN, is towards TINA and COBRA and similar architectures. However, it will take time, i.e. 3 to 5 years, before products with the same functionality and performance, as that of today's IN, will emerge.

The service platform is regarded as a wider concept than the IN-platform since it includes stand alone "boxes" which are connected in ways other than by IN's standardised protocols.

Today's IN-platform in the fixed network is actually a service platform in the sense that it mixes IN and stand alone service nodes which are connected either via P7/P8, or SS7 (ITUP, NTUP, ISUP).

The applicant's service network today consists of SCP from Ericsson SSI 2.1. In the applicant's network there are SSPs in two trunk exchanges and 4 pairs of SCPs. AST-DR connected to an SSP is utilised for voice output. Other services are offered via "service-boxes", here referred to as SSNs (stand-alone service nodes). Today the VMIS voice platform (Bull) for the applicant's Telesvar, Teligent for faxbox and Access Line for Persona (today via P7/P8. later ISUP) is in the process of installation. SSI2 is connected to the support systems via SMAS which also functions as a service creation and unifying link for standby. In some services a GW (KODEX) made by the applicant is used to connect the SMAS to the customer administration systems.

The applicant's Mobitel service platform currently consists of a stand alone SSP. In the future, the SSP will be contained in an MSC so there will be no need for a stand alone SSP in the provision of mobile services. The Mobitel service platform is dominated by VMIS. which is used for Mobilsvar. Atlas is used as a fax box. Both these are stand alone service nodes connected to SS7. A SCP (IN2.1) has recently been installed in Mobitel Direkt.

The connection of the support systems (CCBARB) to SMAS is made via GW (INAS).

IN has a strongly function oriented approach where data has the quality of an additional aspect. This means that each service has a strong connection between the service and customer data.

Today, customers want to keep all their services together so that they can make changes to their total service profile, and collect and arrange billing in new and different ways, i.e. have a better total control. The quantity of data which an IN system must handle, can be expected to increase dramatically because of the need to adapt to customer requirements. This means that in all systems, from the network level to customer administration systems, data/service profiles for a given customer must be kept together. The service platform must, therefore, be more data oriented.

Separate nodes, (SCP and SDP), in modem IN systems require that the script used in SCPs must perform a large number of data base operations in relation to SDPs, especially if there is a lot of customer unique data used in the provision of a service. This creates substantial protocol traffic between nodes. In order to reduce unnecessary traffic between nodes, the intelligence in nodes, such as SDP and IP nodes, can be increased.

Protocols, such as INAP, require substantial execution capacity. These standards only evolve slowly within the telecommunications standards sector and among telecommunications suppliers. At the same time, the computer and data processing sectors offer protocols with broadband transport capability which are well adapted to the needs of telecommunications and which develop substantially faster than the standardised telecommunications protocols.

New services will include functions, such as "hot billing", which demand better integration between service platforms in the network and support systems. These developments are supported by the use of UNIX. In the long run, concepts such as TINA-C and CORBA will offer that support. TINA-C has a totally integrated approach to network and support.

The network architecture to which the present invention relates can be described as a level-oriented architecture. This architecture is aimed at increasing the separate identities of different aspects of the service platform and thereby facilitating service development independently of the physical structure of the service platform. This, in turn, facilitates the packaging of services and the creation of services from service components and the redistribution of service components on other physical platforms.

To realise this architecture, it is necessary to identify service components and product common functions (PGF), and to create an application architecture which includes packeting of, and communication between, components.

in many service/product functions both small modules, such as geographic and time control, and large modules, such as voice mail box, are used repeatedly in different service profiles. This is the case for both the fixed network and mobile networks, as well as for services which span both the fixed and mobile networks. This can result in lower efficiency development and, more seriously, differences in the subscriber-network interface.

The system to which the present invention relates permits the use of small and large service components and the construction, where appropriate, of larger service components from smaller components.

Some examples of service components are set out below:
- automatic registration on GSM telephones;
- direct connection to customer control from predefined numbers;
- registration, with respect to A-numbers, on the telephone from which a call is made;
- voice mailbox functions;
- price and number plan;
- account call functionality;
- credit limits;
- blockings;
- cost warnings;

- customer control;
- change of price;
- customer controlled debiting;
- once-for-all price;
- "hot billing";
- statistics; and
- geographic and time control.

Characteristics of these service components are that they may:
- include product common functions (PGF);
- be packeted (documented) according to certain rules/internal standards; and
- communicate with each other by means of internal standards

A service component may be allocated to any node and may be a "Plus" service.

The packeting of PGF and other functions in a service component architecture means that it must be possible to describe for each service component's:
- functions and data; and
- interfaces, for both operations and data, towards other service components.

As container protocols between applications, except SSP - SCP, RPC may be preferred. RPC is usually used between computers employing UNIX as an operating system. However, a number of variations are possible, for example, DCE-RPC and SUN-RPC. In order to make communications function over different types of RPC, an internal standard must be specified.

On the other hand. it is noted that Ericsson's AXE-based SCP does not offer RPC. For this, a gateway/mediation device, or other modification of the SSI-platform, is required.

The service platform, to which the present invention relates, is considerably more integrated than current service platforms, in a number of respects, for example:
- the service platform can be used for services based on both the fixed and mobile networks;
- stand alone "boxes" are integrated in service nodes and IPs; and
- service nodes are directly connected.

The service components used as building blocks for services and service profiles may be distributed over a number of nodes. This means that more SCPs, SDPs and IPs etc. are involved in the execution of a service. In fact, the service platform can be considered as a number of service nodes with different specialisations.

One characteristic of future service networks is that customer data will be centred in one, or more, SDPs. An SDP can cooperate with a number of SCPs in which are located different services and service components. Today's "boxes" are either IPs, or SNs, which are well integrated into the platform. Furthermore, mobile services are well integrated. Services delivered via ATM and the internet can also be controlled via the service network. Different types of nodes can be interconnected more flexibly and adapted for different purposes. The support systems are connected via internally standardised interfaces which also make possible connection of external data bases, such as VISA.

In order to link service components together over a number of nodes, RPC on TCP/IP can be used. Alternatively, INAP can be used for data transmissions between SCPs and other nodes, together with conversion to RPC. This may yield internal standardisation and a greater bandwidth than can be achieved with INAP.

In addition to the ability to distribute service components between nodes on the service platform, it is possible to split the service platform into two levels, one level handling the switching of data trains within the service platform and the other level handling the execution of services.

The service network is thus built from different "levels", where SCPs are used for service connection and UNIX-based systems are used to provide more open and flexible service execution than is possible with prior art IN systems. This should encourage competition both in terms of computer hardware and software.

## Claims

1. A telecommunications system, having an intelligent network architecture and including at least one service data point (SDP), at least one service control point (SCP), a plurality of service switching points (SSP), and a telecommunications traffic network, **characterised in that** functional entities, controlling execution of telecommunications services, are linked by a data transmission network including at least two LANs, to each of which is connected a plurality of functional entities, said data transmission network being capable of operating independently of said telecommunications traffic network, said at least two LANs are interconnected by means of an ATM link over which data is passed in RPC and TCP/IP format, **in that** said telecommunications system is arranged in three hierarchical levels, namely:
- a service execution level formed by said LANs and the functional entities connected thereto;
- a service switching level; and
- a switching and transport level,
**in that** said service execution level is connected to said switching and transport level by means of an INAP/TCP/IP link between said data transmission network and an SCP in said service switching level, and **in that** said SCP in said service switching level is directly linked to switching entities in said switching and transport level.

2. A telecommunications system as claimed in claim 1, **characterised in that** said functional entities include one, or more, of the following:
- internet servers;
- service data points;
- service control points;
- service nodes;
- intelligent peripherals; and
- internet support systems.

3. A telecommunications system as claimed in any of claims 1 to 2, **characterised in that** said switching and transport level includes one, or more, of the following switching entities:
- an exchange based SSP;
- an SSP;
- an ATM SSP; and
- an Internet SSP.

4. A telecommunications system as claimed in any of claims 1 to 3, **characterised in that** said service switching level includes one, or more SCPs.

5. A telecommunications system as claimed in any of claims 2 to 4, **characterised in that** gateway means are provided to link functional entities, including SCPs, in said service execution level, to switching entities in said switching and transport level.

6. A telecommunications system as claimed in either claim 4, or 5, **characterised in that** SCPs in said service switching level are linked to functional entities in said service execution level via a gateway means, and are, in addition, linked directly to said data transmission network.

7. A telecommunications system as claimed in any of claims 1 to 6, **characterised in that** intelligent peripherals in said service execution level are linked by speech paths to SSPs in said switching and transport level, said speech paths being used for transmission of recorded announcements, voice prompts, or the like.

8. A telecommunications system as claimed in any of dams 1 to 7, **characterised in that** service networks for the provision of:
- billing,
- maintenance and repair; and
- administration;
are linked to said data transmission network and are thereby adapted for two way communication with:
- switching entities in said switching and transport level;
- functional entities in said service execution level; and
- service control points in said service switching level.

9. A telecommunication system as claimed in any of claims 7 to 8, **characterised in that** signalling data is transmitted over links between said gateway means and switching entities in said switching and transport level and SCPs in said service switching level by means of a version of CCITT signalling No.7, modified for use with INs.

10. A telecommunications system as claimed in any of claims 1 to 9, **characterised in that** said switching and transport level is adapted to carry subscriber traffic including, but not limited to, data, speech, video and facsimile.

11. A telecommunications system as claimed in any previous claim, **characterised in that** said telecommunications system includes at least a SCP a SDP, and a plurality of intelligent peripherals, and **in that** telecommunications services and service profiles, provided to subscribers to said telecommunications system, can be assembled from a plurality of service components, at least some of which are located in different ones of said plurality of intelligent peripherals.

12. A telecommunications system as claimed in claim 11, **characterised in that** some of said plurality of service components, required for a telecommunications service and/or service profile, may be located in, and obtainable from, said service control point.

13. A telecommunications system as claimed in either claim 11, or 12, **characterised in that** said telecommunications system may include more than one SCP.

14. A telecommunications system as claimed in any of claims 11 to 13, **characterised in that** at east some services provided by said telecommunications system are generate by cooperation between:
- at least: two intelligent peripherals; or
- one, or more intelligent peripherals and one, or more SCPs; or
- at least two SCPs.

15. A telecommunications system as claimed in any previous claim, **characterised in that** at least some services, provided by said telecommunications system, are built from service components held on one, or more, intelligent peripherals and/or SCPs.

16. A telecommunications system as claimed in either claim 14, or 15, **characterised in that** said service components may include:
- automatic registration on GSM telephones;
- direct connection to customer control from predefined numbers;
- registration, with respect to A-numbers, on the telephone from which a call is made;
- voice mailbox functions;
- price and number plan;
- account call functionality;
- credit limits;
- blockings;
- cost warnings;
- customer control;
- change of price;
- customer controlled debiting;
- once-for-all price;
- "hot billing";
- statistics; and
- geographic and time control.

17. A telecommunications system as claimed in claim 13, **characterised in that** each of said plurality of intelligent peripherals and said at least one SCP have independent access to said SDP.

18. A telecommunications system as claimed in any previous claim, **characterised in that** there is provided at least on SDP linked to a telecommunications information system having a central data base holding data on operational aspects of said telecommunications system and subscribers connected thereto, and **in that** service network data broker means are provided for handling data requests from said service data point to said central data base and data supplied from said central data base to said service data point.

19. A telecommunications system as claimed in claim 18, **characterised in that**, said central data base can access data held on at least one data base external to said telecommunications system.

20. A telecommunications system as claimed in claim 19, **characterised in that**, said at least one external data base includes a telebanking and/or credit card database.

21. A telecommunications system as claimed in any of claims 18, to 20, **characterised in that** said central data base is adapted to supply data to, and receive data from, a plurality of service management functions.

22. A telecommunications system as claimed in claim 21, **characterised in that** said plurality of service management functions include subscriber location services for mobile telephony, paging services and personal number services.

23. A telecommunications system as claimed in any of claims 17 to 22, **characterised in that** said central data base may be adapted to supply data to, and receive data from, a plurality of management functions.

24. A telecommunications system as claimed in any of claims 19 to 21, **characterised in that** said plurality of management functions include billing functions and, repair and maintenance functions.

25. A telecommunications system as claimed in any of claims 18 to 24, **characterised in that** data communications between said service management functions, or said management functions, and said central data base are effected by a LAN and data broker means.

## Patentansprüche

1. Telekommunikationssystem mit einer intelligenten Netzwerkarchitektur und mit wenigstens einem Servicedatenpunkt (SDP), wenigstens einem Servicesteuerpunkt (SCP), einer Anzahl von Serviceschaltpunkten (SSP) und einem Telekommunikationsverkehrsnetz, **dadurch gekennzeichnet, dass** Funktionseinheiten, die die Durchführung von Telekommunikationsdiensten steuern, durch ein Datenübertragungsnetz verbunden sind, das wenigstens zwei LANs enthält, an welche jeweils eine Anzahl von Funktionseinheiten angeschlossen sind, wobei das Datenübertragungsnetz in der Lage ist, unabhängig von dem Telekommunikationsverkehrsnetz zu arbeiten, die wenigstens zwei LANs mittels einer ATM-Verbindung miteinander verbunden sind, über die Daten im RPC- und TCP/IP-Format geleitet werden, dass das Telekommunkationssystem in drei hierarchischen Ebenen angeordnet ist, nämlich:
- eine Servicedurchfuhrungsebene, die durch die LANs und die an diese angeschlossene Funktionseinheiten gebildet ist;
- eine Serviceschaltebene; und
- eine Schalt- und Transportebene,
dass die Servicedurchführungsebene mittels einer INAP/TCP/IP-Verbindung zwischen dem Datenübertragungsnetz und einem SCP in der Serviceschaltebene an die Schalt- und Transportebene angeschlossen ist, und dass der SCP in der Serviceschaltebene direkt mit den Schalteinheiten in der Schalt- und Transportebene verbunden ist.

2. Telekommunikationssystem nach Anspruch 1,
**dadurch gekennzeichnet, dass** die Funktionseinheiten eine oder mehrere der folgenden aufweisen:
- Intemetserver;
- Servicedatenpunkte;
- Servicesteuerpunkte;
- Serviceknoten;
- Intelligente Peripheriegeräte; und
- Internet-Support-Systeme.

3. Telekommunikationssystem nach einem der Ansprüche 1 bis 2,
**dadurch gekennzeichnet, dass** die Schalt- und Transportebene eine oder mehrere der folgenden Schalteinheiten aufweist:
- einen auf Austausch basierenden SSP;
- einen SSP;
- einen ATM-SSP; und
- einen Intemet-SSP.

4. Telekommunikationssystem nach einem der Ansprüche 1 bis 3,
**dadurch gekennzeichnet, dass** die Serviceschaltebene einen oder mehrere SCPs enthält.

5. Telekommunikationssystem nach einem der Ansprüche 2 bis 4,
**dadurch gekennzeichnet, dass** Übergangseinrichtungen vorgesehen sind, um Funktionseinheiten, die SCPs enthalten, in der Servicedurchführungsebene mit Schalteinheiten in der Schalt- und Transportebene zu verbinden.

6. Telekommunikationssystem nach einem der Ansprüche 4 oder 5,
**dadurch gekennzeichnet, dass** die SCPs in der Serviceschaltebene mit Funktionseinheiten in der Servicedurchführungsebene über eine Übergangseinrichtung verbunden sind und zusätzlich direkt mit dem Datenübertragungsnetz verbunden sind.

7. Telekommunikationssystem nach einem der Ansprüche 1 bis 6,
**dadurch gekennzeichnet, dass** intelligente Peripheriegeräte in der Servicedurchführungsebene mittels Sprechpfaden mit den SSPs in der Schalt- und Transportebene verbunden sind, wobei die Sprechpfade für die Übertragung von aufgezeichneten Ankündigungen, Aufforderungsansagen oder dergleichen verwendet werden.

8. Telekommunikationssystem nach einem der Ansprüche 1 bis 7,
**dadurch gekennzeichnet, dass** die Servicenetze für das Vorsehen von:
- Abrechnung;
- Wartung und Reparatur; und
- Verwaltung;
mit dem Datenübertragungsnetz verbunden sind und dadurch für die Zweiwegekommunikation mit:
- Schalteinheiten in der Schalt- und Transportebene;
- Funktionseinheiten in der Servicedurchführungsebene; und
- Servicesteuerpunkten in der Serviceschaltebene
geeignet sind.

9. Telekommunikationssystem nach einem der Ansprüche 7 bis 8,
**dadurch gekennzeichnet, dass** Signalgabedaten über Verbindungen zwischen Übergangseinrichtungen und Schalteinheiten in der Schalt- und Transportebene und SCPs in der Serviceschaltebene mittels einer Version von CCITT-Signalgabe Nr. 7, die für die Verwendung mit INs modifiziert ist, übertragen werden.

10. Telekommunikationssystem nach einem der Ansprüche 1 bis 9,
**dadurch gekennzeichnet, dass** die Schalt- und Transportebene so ausgebildet ist, dass sie Teilnehmerverkehr durchführen kann, der, jedoch nicht ausschließlich, besteht aus Daten, Sprache, Video und Facsimile.

11. Telekommunikationssystem nach einem der vorstehenden Ansprüche,
**dadurch gekennzeichnet, dass** das Telekommunikationssystem wenigstens einen SCP und SDP enthält und eine Anzahl von intelligenten Peripheriegeräten hat, und dass Telekommunikationsdienste und Serviceprofile, die den Teilnehmern an diesem Telekommunikationssystem geboten werden, aus einer Anzahl von Servicekomponenten zusammengesetzt werden können, von denen wenigstens einige in unterschiedlichen einen der Anzahl von intelligenten Peripheriegeräten liegen.

12. Telekommunikationssystem nach Anspruch 11,
**dadurch gekennzeichnet, dass** einige der Anzahl von Servicekomponenten, die für einen Telekommunikationsdienst und/oder ein Serviceprofile erforderlich sind, in dem Servicesteuerpunkt angeordnet sind oder von diesem erhaltbar sind.

13. Telekommunikationssystem nach Anspruch 11 oder 12,
**dadurch gekennzeichnet, dass** das Telekommunikationssystem mehr als einen SCP enthalten kann.

14. Telekommunikationssystem nach einem der Ansprüche 11 bis 13,
**dadurch gekennzeichnet, dass** wenigstens einige der Dienste, die von dem Telekommunikationssystem angeboten werden durch Kooperation zwischen:
- wenigstens zwei intelligenten Peripheriegeräten; oder
- einem oder mehreren intelligenten Peripheriegeräten und einem oder mehreren SCPs; oder
- wenigstens zwei SCPs
erzeugt werden.

15. Telekommunikationssystem nach einem der vorstehenden Ansprüche,
**dadurch gekennzeichnet, dass** wenigstens einige Dienste, die von dem Telekommunikationssystem angeboten werden aus Servicekomponenten gebaut sind, die an einem oder mehreren intelligenten Peripheriegeräten und/oder SCPs gehalten werden.

16. Telekommunikationssystem nach Anspruch 14 oder 15,
**dadurch gekennzeichnet, dass** die Servicekomponenten umfassen können:
- Automatische Registrierung an GSM-Telefonen;
- Direktverbindung mit Kundensteuerung von vorbestimmten Nummern;
- Registrierung mit Bezug auf A-Nummem an dem Telefon, von welchem aus ein Anruf erfolgt;
- Sprach-Mailbox-Funktionen;
- Preis und Nummernplan;
- Kontoaufrufsfunktionsfahigkeit;
- Kreditbegrenzungen;
- Sperrungen;
- Kostenwarnungen;
- Teilnehmersteuerung;
- Preisänderung;
- Teilnehmergesteuerte Belastung;
- Ein-für-allemal-Preis;
- "hot-billing";
- Statistiken; und
- Geografische und Zeitsteuerung.

17. Telekommunikationssystem nach Anspruch 13,
**dadurch gekennzeichnet, dass** jedes der Anzahl von intelligenten Peripheriegeräten und wenigstens ein SCP unabhängigen Zugriff auf den SDP haben.

18. Telekommunikationssystem nach einem der vorstehenden Ansprüche,
**dadurch gekennzeichnet, dass** wenigstens ein SDP mit einem Telekommunkationsinformationssystem verbunden ist, das eine zentrale Datenbasis hat, die Daten bezüglich der Betriebsaspekte des Telekommunikationssystems und der daran angeschlossenen Teilnehmer hat, und dass eine Servicenetz-Datenvermittlungseinrichtung vorgesehen ist, um Datenanfragen von dem Servicedatenpunkt an die zentrale Datenbasis und Daten, die von der zentralen Datenbasis an den Servicedatenpunkt geleitet worden sind, zu handhaben.

19. Telekommunikationssystem nach Anspruch 18,
**dadurch gekennzeichnet, dass** die zentrale Datenbasis auf Daten zugreifen kann, die auf wenigstens einer zum Telekommunikationssystem externen Datenbasis gehalten werden.

20. Telekommunikationssystem nach Anspruch 19,
**dadurch gekennzeichnet, dass** wenigstens eine externe Datenbasis eine Telebanking- und/oder Kreditkartendatenbasis enthält.

21. Telekommunikationssystem nach einem der Ansprüche 18 bis 20,
**dadurch gekennzeichnet, dass** die zentrale Datenbasis so ausgebildet ist, dass sie Daten auf eine Anzahl von Servicemangagementfunktionen senden und von diesen Daten empfangen kann.

22. Telekommunikationssystem nach Anspruch 21,
**dadurch gekennzeichnet, dass** die Anzahl von Servicemanagementfunktionen Teilnehmer-Ortsdienste für mobiles Telefonieren, Funkrufdienste und persönliche Nummerndienste enthält.

23. Telekommunikationssystem nach einem der Ansprüche 17 bis 22,
**dadurch gekennzeichnet, dass** die zentrale Datenbasis so ausgebildet sein kann, dass sie Daten zu einer Anzahl von Managementfunktionen leiten und von diesen Daten empfangen kann.

24. Telekommunikationssystem nach einem der Ansprüche 19 bis 21,
**dadurch gekennzeichnet, dass** die Anzahl von Managementfunktionen Rechnungsfunktionen und Reparatur- und Wartungsfunktionen umfassen.

25. Telekommunikationssystem nach einem der Ansprüche 18 bis 24,
**dadurch gekennzeichnet, dass** Datenkommunikationen zwischen den Servicemanagementfunktionen oder den Managementfunktionen und der zentralen Datenbasis mittels eines LAN und einer Datenvermittlungseinrichtung durchgeführt werden.

## Revendications

1. Système de télécommunication, ayant une architecture de réseau intelligent et comprenant au moins un point de données de service (SDP), au moins un point de commande de service (SCP), une pluralité de points de commutation de service (SSP) et un réseau de trafic de télécommunication, **caractérisé en ce que** des entités fonctionnelles, commandant l'exécution de services de télécommunication, sont reliées par un réseau de transmission de données incluant au moins deux réseaux locaux (LAN), à chacun desquels est connectée une pluralité d'entités fonctionnelles, le dit réseau de transmission de données pouvant fonctionner indépendamment du dit réseau de trafic de télécommunication, les dits au moins deux LAN sont interconnectés au moyen d'une liaison en mode de transfert asynchrone (ATM) sur laquelle les données sont transmises en format d'acheminement d'appel précédent (RPC) et de protocole de commande de transmission/périphérique intelligent (TCP/IP), et **en ce que** le dit système de télécommunication est agencé en trois niveaux hiérarchiques, à savoir :
- un niveau d'exécution de service formé par les dits LAN et les entités fonctionnelles connectées à ceux-ci ;
- un niveau de commutation de service ; et
- un niveau de commutation et de transport,
**en ce que** le dit niveau d'exécution de service est connecté au dit niveau de commutation et de transport au moyen d'une liaison de protocole d'applications de commande de réseau intelligent / protocole de commande de transmission / périphérique intelligent (INAP / TCP / IP) entre le dit réseau de transmission de données et un SCP dans le dit niveau de commutation de service, et **en ce que** le dit SCP dans le dit niveau de commutation de service est directement relié à des entités de commutation dans le dit niveau de commutation et de transport.

2. Système de télécommunication selon la revendication 1, **caractérisé en ce que** les dites entités fonctionnelles comprennent un ou plusieurs des éléments suivants :
- serveurs Internet ;
- points de données de service ;
- points de commande de service ;
- noeuds de service ;
- périphériques intelligents ; et
- systèmes de support Internet.

3. Système de télécommunication selon une quelconque des revendications 1 et 2, **caractérisé en ce que** le dit niveau de commutation et de transport comprend une ou plusieurs des entités de commutation suivantes :
- un SSP à base de central téléphonique ;
- un SSP ;
- un SSP ATM ; et
- un SSP Internet

4. Système de télécommunication selon une quelconque des revendications 1 à 3, **caractérisé en ce que** le dit niveau de commutation de service comprend un ou plusieurs SCP.

5. Système de télécommunication selon une quelconque des revendications 2 à 4, **caractérisé en ce que** des moyens de passerelle sont prévus pour relier des entités fonctionnelles, incluant des SCP, dans le dit niveau d'exécution de service, à des entités de commutation dans le dit niveau de commutation et de transport.

6. Système de télécommunication selon la revendication 4 ou la revendication 5, **caractérisé en ce que** des SCP dans le dit niveau de commutation de service sont reliés à des entités fonctionnelles dans le dit niveau d'exécution de service via un moyen de passerelle, et ils sont en outre reliés directement au dit réseau de transmission de données.

7. Système de télécommunication selon une quelconque des revendications 1 à 6, **caractérisé en ce que** des périphériques intelligents dans le dit niveau d'exécution de service sont reliés par des chemins vocaux à des SSP dans le dit niveau de commutation et de transport, les dits chemins vocaux étant utilisés pour la transmission d'annonces enregistrées, de guidages vocaux, ou analogues.

8. Système de télécommunication selon une quelconque des revendications 1 à 7, **caractérisé en ce que** des réseaux de service pour la réalisation de :
- facturation :
- entretien et réparation ; et
- administration ;
sont reliés au dit réseau de transmission de données et sont ainsi prévus pour une communication bidirectionnelle avec :
- des entités de commutation dans le dit niveau de commutation et de transport ;
- des entités fonctionnelles dans le dit niveau d'exécution de service ; et
- des points de commande de service dans le dit niveau de commutation de service.

9. Système de télécommunication selon une quelconque des revendications 7 et 8, **caractérisé en ce que** des données de signalisation sont transmises sur des liaisons entre les dits moyens de passerelle et des entités de commutation dans le dit niveau de commutation et de transport et des SCP dans le dit niveau de commutation de service, au moyen d'une version de signalisation CCITT N°7, modifiée pour une utilisation avec des réseaux intelligents (IN).

10. Système de télécommunication selon une quelconque des revendications 1 à 9, **caractérisé en ce que** le dit niveau de commutation et de transport est prévu pour transporter un trafic d'abonné incluant, mais non limitativement, des données, une parole, une vidéo et une télécopie.

11. Système de télécommunication selon une quelconque des revendications précédentes, **caractérisé en ce que** le dit système de télécommunication comprend au moins un SCP et un SDP et une pluralité de périphériques intelligents, et **en ce que** des services de télécommunication et des profils de service, fournis aux abonnés du dit système de télécommunication, peuvent être assemblés à partir d'une pluralité de composants de service, dont au moins certains sont situés dans différents périphériques de la dite pluralité de périphériques intelligents.

12. Système de télécommunication selon la revendication 11, **caractérisé en ce que** certains de la dite pluralité de composants de service, requis pour un service de télécommunication et/ou un profil de service, peuvent être situés dans le dit point de commande de service et peuvent être obtenus à partir de celui-ci.

13. Système de télécommunication selon la revendication 11 ou la revendication 12, **caractérisé en ce que** le dit système de télécommunication peut comprendre plus d'un SCP.

14. Système de télécommunication selon une quelconque des revendications 11 à 13, **caractérisé en ce qu'**au moins certains services fournis par le dit système de télécommunication sont générés par coopération entre :
- au moins deux périphériques intelligents ; ou
- un ou plusieurs périphériques intelligents et un ou plusieurs SCP ; ou
- au moins deux SCP.

15. Système de télécommunication selon une quelconque des revendications précédentes, **caractérisé en ce qu'**au moins certains services, fournis par le dit système de télécommunication, sont construits à partir de composants de service maintenus sur un ou plusieurs périphériques intelligents et/ou un ou plusieurs SCP.

16. Système de télécommunication selon la revendication 14 ou la revendication 15, **caractérisé en ce que** les dits composants de service peuvent inclure :
- un enregistrement automatique sur des téléphones GSM ;
- une commande de connexion directe à un client à partir de numéros prédéfinis ;
- un enregistrement, en ce qui concerne des numéros A, sur le téléphone à partir duquel un appel est effectué ;
- des fonctions de boîte aux lettres vocale ;
- un plan de prix et de numéros ;
- une fonctionnalité d'appel de compte ;
- des limites de crédit ;
- des blocages ;
- des avertissement de coût ;
- une commande de client ;
- un changement de prix ;
- un débit contrôlé du client ;
- un prix forfaitaire ;
- une « facturation immédiate » ;
- des statistiques ; et
- une commande géographique et de temps.

17. Système de télécommunication selon la revendication 13, **caractérisé en ce que** chacun de la dite pluralité de périphériques intelligents et le dit au moins un SCP ont un accès indépendant au dit SDP.

18. Système de télécommunication selon une quelconque des revendications précédentes, **caractérisé en ce qu'**il est prévu au moins un SDP relié à un système d'information de télécommunication ayant une base de données centrale contenant des données sur les aspects opérationnels du dit système de télécommunication et des abonnés connectés à celui-ci, et **en ce que** des moyens d'échange de données de réseau de service sont prévus pour traiter des demandes de données présentées par ledit point de données de service à la dite base de données centrale et des données fournies par le dite base de données centrale au dit point de données de service.

19. Système de télécommunication selon la revendication 18, **caractérisé en ce que** la dite base de données centrale peut accéder à des données maintenues sur au moins une base de données extérieure au dit système de télécommunication.

20. Système de télécommunication selon la revendication 19, **caractérisé en ce que** la dite au moins une base de données extérieure comprend une base de données de banque à distance et/ou de carte de crédit.

21. Système de télécommunication selon une quelconque des revendications 18 à 20, **caractérisé en ce que** la dite base de données centrale est prévue pour fournir des données à une pluratité de fonctions de gestion de service et pour recevoir des données à partir de ces dernières.

22. Système de télécommunication selon la revendication 21, **caractérisé en ce que** la dite pluralité de fonctions de gestion de service comprend des services de localisation d'abonné pour téléphonie mobile, des services de recherche de personne et des services de numéro personnel.

23. Système de télécommunication selon une quelconque des revendications 17 à 22, **caractérisé en ce que** la dite base de données centrale peut être prévue pour fournir des données à une pluralité de fonctions de gestion, et pour recevoir des données en provenance de ces dernières.

24. Système de télécommunication selon une quelconque des revendications 19 à 21, **caractérisé en ce que** la dite pluralité de fonctions de gestion comprend des fonctions de facturation et des fonctions de réparation et entretien.

25. Système de télécommunication selon une quelconque des revendications 18 à 24, **caractérisé en ce que** les communications de données entre les dites fonctions de gestion de service, ou les dites fonctions de gestion, et la dite base de données centrale sont effectuées par un LAN et des moyens d'échange de données.
